# EUROPEAN PATENT APPLICATION

(11) **EP 1 672 472 A1**
(43) Date of publication of application: **21.06.2006**
(21) Application number: 04748052.0
(22) Date of filing: 22.07.2004
(51) Int. Cl.: G06F 3/033, G06F 3/023

(54) **DATA INPUT DEVICE, INFORMATION EQUIPMENT, INFORMATION EQUIPMENT CONTROL METHOD, AND COMPUTER PROGRAM**

(30) Priority: 22.07.2003 JP 2003277427; 12.12.2003 JP 2003414103
(71) Applicant: Kumazawa, Itsuo, Chigasaki-shi, Kanagawa 253-0082 (JP)
(72) Inventor: Kumazawa, Itsuo, Chigasaki-shi, Kanagawa 253-0082 (JP)
(74) Representative: Uchida, Kenji
(86) International application number: PCT/JP2004/010788
(87) International publication number: WO 2005/008468

(57) **Abstract**

A low-cost information input device for information equipment is disclosed which has characteristics of a cross key, a tablet and a stick at the same time with simple technology. Specifically, disclosed is a data input device which operates information equipment by sending an input signal according to the position touched by an operator's finger or the operation performed by the finger. The data input device comprises a finger rest unit for resting the finger, a finger position sensor capable of sensing which one of the three positions, namely which one of the right, left and middle part of the finger rest unit in touched by the finger, and a vertical switch (14) capable of switching by vertical movement of the finger rest unit. In this connection, the finger rest unit is so formed as to support the finger by two rotary bodies (1, 2) respectively having a rotary axis extending in the longitudinal direction of the operator's finger.

## Description

### Technical Field

The present invention relates to a data input device used in electronic equipment and to a technique related to the same.

### Background Art

### (Data input device for stimulating sense of touch)

There are many data input methods that provide feedback through the sense of sight or the sense of hearing to a user. There has been the following techniques for a data input device including a mechanism stimulating a sense of touch of the user.

For example, there are a pin display projecting a pin (Japanese Unexamined Patent Application Publication Nos. 11-161152, 10-55252, and 6-102997) and a method of operating a vibrator or a driving unit combined with a mouse (Japanese Unexamined Patent Application Publication Nos. 6-102997 and 2001-356862). Further, there is a method of informing an operator that a cursor has reached an object region on a screen by vibrating a pointing stick (Japanese Unexamined Patent Application Publication No. 2000-29623). In addition, there is a device which stimulates a finger so as to feel the sense of touch of a virtual object by ejecting a pin along the position of a fingertip as the fingertip moves (Japanese Unexamined Patent Application Publication Nos. 2000-259333 and 2000-47792).

### (Data input by one finger)

When inputting a plurality of information by using one finger, a method of designating information inputted by combining the pressing position and the depressing position of a fingertip (Japanese Unexamined Patent Application Publication No. 11-224161, Japanese Unexamined Utility Model Registration Application Publication No. 5-55222) is available. However, if the movement range of the finger is limited in order to miniaturize a device, it is difficult to precisely grasp the pressing position and the depressing position within the limited movement range. In addition, if the descent, movement, and ascent of the fingertip are done quickly, before the descent of the fingertip is detected, the fingertip erroneously starts to move by mistake and the position of the fingertip is separated from a desired location when detecting the descent. Accordingly, it causes an erroneous input.

### (Sense of touch and combination)

In order to solve the above-described problems, a method is designed to reliably grasp the pressing position and the depressing position by adding another tactual stimulus according to the position of the fingertip so as to differentiate according to the sense of touch when designating information inputted by combining the pressing position and the depressing position of the fingertip (Japanese Unexamined Patent Application Publication No. 2002-278694). With this method, it becomes possible to reliably grasp the position of the finger and perform an input operation while the finger moves quickly depending on the sense of touch within a narrow movement range. However, a device according to this method becomes complex.

In addition, a method is designed to distinguish the shape or size of a cursor key by changing the shape or the size according to a direction by using the sense of touch (Japanese Unexamined Patent Application Publication No. 3-90922). Further, a method is designed to input information by using unevenness of a ball shaped projection array as a clue while disposing a plurality of ball shaped projections in the tactual part of the finger for the fingertip to smoothly move around the ball shaped projection array (Japanese Unexamined Patent Application Publication Nos. 11-353091 and 2001-166871).

In these methods, because the unevenness is statically fixed, it is not possible to differentiate a specific uneven shape even while moving the fingertip. Since the method designates the information to be inputted by using only the pressing position of the fingertip, it is also difficult to input a plurality of information without increasing the number of ball shaped projections.

### Disclosure of Invention

In order to solve the above-described problems, the present invention provides a new data input device including a function of a directional key which can be operated from a moment when a finger is located thereon and a function capable of checking the position of the operating finger by a sense of touch and a technique related to the same.

The data input device according to the invention is different from a joystick or a track ball in that the data input device can detect the position (three different positions) touched by the finger at the moment when the finger is positioned thereon.

The difference from a tablet is that the data input device according to the invention has a sense of touch such as repulsive power or unevenness, a sense of clicking by operating a button, and can smoothly move the touched finger while being touched in the data input device.

The difference from a cross key is that the data input device according to the invention does not only perform a simple tapping movement by the finger but can also detect a movement direction such as a right, left, forward, or backward direction and can detect the movement speed according to necessity.

The data input device according to the invention includes characteristics of the cross key, the tablet, and the joy stick at low-cost and with simple technology.

### (Claim 1)

The invention according to Claim 1 provides a data input device, which transmits an input signal according to the position touched by an operating finger or an operation performed by the finger, having: a finger rest unit on which the finger is placed, a finger position sensor capable of detecting one of three positions, such as right, left, and middle parts, of the finger rest unit touched by the finger, and a press switch (14) capable of switching by the vertical movement of the finger rest unit. The finger rest unit is formed so as to support the finger by two rotary bodies (1, 2) having a rotary axis extending in the longitudinal direction of the operating finger.

The 'information equipment' may be a TV, a TV image recorder (video recorder, DVD recorder, or the like), a car navigation device as well as a computer, a cellular phone, or a PDA (Personal Digital Assistants). In the invention, the data input device is physically separated from the information equipment of the TV, the TV image recorder, or the car navigation device.

The 'finger rest unit' includes a configuration which allows the finger to be placed on one of the three positions such as the right, left, and middle part of the rotary bodies (1, 2).

The finger position sensor' is a combination of an electrostatic sensor which senses the touch of the finger, and contact points adopting a seesaw configuration in the 'finger rest unit'.

The 'rotary bodies (1, 2)' include a physically rotating rotary body and a pseudo electrostatic sensing type rotary body rotated by, for example, a touching of the finger.

The 'rotary bodies (1, 2)' are disposed having a smaller gap than the width of the finger while surfaces of the rotary bodies (1, 2) are not contacted with each other.

### (Operation and effect)

First, it is assumed that it is possible to operate the data input device in respect to the information equipment.

Continuously, a user who operates the information equipment rests a finger on any of three positions, namely, right, left, or middle of the finger rest unit. The finger position sensor detects the position on which the finger is placed.

The user can move the finger placed on the finger rest unit in a horizontal direction or can press the finger down. When the user moves the finger in the horizontal direction, the finger position sensor detects the moving finger. When the user presses the finger down, the press switch (14) is operated.

After the press switch (14) is turned on by pressing the finger down, the user can directly separate the finger from the finger rest unit or can separate the finger after moving the finger in the horizontal direction. When moving the finger in the horizontal direction, the finger position sensor detects the movement.

The information equipment is operated based on the above-described series of operations such as selecting the position to be rested on the finger rest unit and touching by the finger, horizontal movement after touching, turning on the vertical switch, horizontal movement thereafter, and turning off the vertical switch.

The user can smoothly move the finger in the horizontal direction since the finger rest unit includes the rotary bodies having a rotary axis extending in the longitudinal direction.

### (Claim 2)

The invention according to Claim 2 defines the data input device according to Claim 1 and further includes a rotation detection sensor (20) capable of detecting whether or not the two rotary bodies (1, 2) rotate.

### (Operation and effect)

When operating the information equipment, a rotation speed or rotational amount of the rotary bodies (1, 2) can be used as parameters, respectively, by including the rotation detection sensor (20) on the rotary bodies (1, 2). As a result, the variation of the information equipment can be increased.

### (Claim 3)

The invention according to Claim 3 defines the data input device according to Claim 1 or 2 and further includes the finger rest unit having relative position tactual members (44, 45) capable of touching against the finger located between the two rotary bodies (1, 2) of the finger rest unit.

The 'relative position tactual member' is, for example, a combination of a projection touched with main surface part of the finger, the rotary body (44) having a smaller diameter than the two right and left rotary bodies (1, 2), and a rotary axis (45).

### (Operation and effect)

Since the 'relative position tactual members (44, 45)' are located between the two rotary bodies (1, 2), the 'relative position tactual members (44, 45)' can detect the relative position without seeing by the finger placed on the finger rest unit for the operation touches the relative position tactual members (44, 45).

### (Claim 4)

The invention according to Claim 4 defines the data input device according to any one of Claims 1 to 3 and further includes a finger rest unit slide mechanism capable of sliding the finger rest unit in the forward or backward direction of the operating finger; and a slide position detection sensor capable of detecting the slide position of the finger rest unit slide mechanism.

The 'finger rest unit slide mechanism' is, for example, a roller disposed at the bottom of the finger rest unit, or rails mounted on a member indicating the finger rest unit and the finger rest unit engaged with each other.

### (Operation and effect)

By including the finger rest unit slide mechanism and the slide position detection sensor, it is possible to use the movement amount or the movement speed in the forward or backward direction of the finger rest unit as the parameters when operating the information equipment. As a result, the variation of the information equipment can be increased.

### (Claim 5)

The invention according to Claim 5 defines the data input device according to Claim 1 or 4 and further includes a data conversion unit which converts an output of each sensor and the press switch (14) so as to match a protocol recognizable by the information equipment; and an adjustment unit that adjusts the output converted by the data conversion unit to a signal corresponding to a method for transmission to the information equipment.

For example, in a case when the information equipment is a personal computer, the information equipment includes the data conversion unit or the forming unit capable of connecting to a USB port included in the personal computer. The control unit may be included in the data input device, the information equipment, or may be included in the software of the information equipment.

In addition, for example, in the case when the information equipment is a TV, the data input device may be a remote controller capable of operating the corresponding TV in a remote place. The data input device includes the data conversion unit and an infrared ray data transmitting port in the remote controller with respect to an infrared ray receiving port mounted on the TV.

### (First variation)

There may be variation in the data input device according to any one of Claims 1 to 5 as follows.

The right and left rotary bodies (1, 2) of the finger rest unit are divided in the forward and backward directions, respectively, and the finger rest unit formed so as to be able to move in the forward and backward directions.

Specifically, the 'division in the forward and backward directions' means that the right rotary body (1) is physically divided into a right-backward rotary body (32) and right-forward rotary body (33).

In the finger rest unit, the configuration 'which is able to move in the forward and backward directions' means a seesaw configuration capable of moving in the forward and backward direction in addition to the sliding mechanism according to Claim 4.

According to this variation, since the right and left rotary bodies (1, 2) exist in the forward and backward directions, respectively, it is possible to detect the direction of the finger rest unit among the right, left, forward, or backward direction.

### (Second variation)

There may be another variation in the data input device according to any one of Claims 1 to 5 as follows.

The finger rest unit includes a finger support configuration in a back side so as to prevent a base side of the finger placed on the finger rest unit from being moved downward. A finger support part of the finger support configuration is capable of sliding in the horizontal direction.

According to this variation, since a part of the finger is rested on the finger support configuration, the user can smoothly move the finger rest unit in the horizontal direction. In addition, since the part of the finger is rested on the finger support configuration, it is easy to prevent a malfunction of the press switch (14).

### (Claim 6)

The invention according to Claim 6 provides information equipment having: an output screen which displays information; and a data input device (for example, a pointing device) which moves a cursor or a pointer displayed on the output screen to the predetermined position.

The data input device is capable of transmitting an input signal according to the position touched by an operating finger or an operation performed by the finger, and includes: a finger rest unit on which the finger is placed, a finger position sensor capable of detecting one of three positions, such as right, left, and middle parts, of the finger rest unit touched by the finger, and a press switch (14) capable of switching by the vertical movement of the finger rest unit. The finger rest unit is formed so as to support the finger by two rotary bodies (1, 2) having a rotary axis extending in the longitudinal direction of the operating finger.

The 'information equipment' combines the data input device. Specifically, the 'information equipment' may be a TV, a TV image recorder (video recorder, DVD recorder, or the like), a car navigation device as well as a computer, a cellular phone, or a PDA (personal digital assistants). In the invention, the data input device is an operation terminal which can be separated from the TV, the TV image recorder, or the car navigation device.

In addition, a data table corresponds to an output signal from the finger position sensor and the press switch (14) of the data input device and an output signal for movement corresponding to the cursor or the pointer displayed on the output screen of the information equipment. The data table may be included in the data input device, the information equipment, or may be included in the software of the information equipment.

### (Operation and effect)

The cursor or the pointer is output on the output screen of the information equipment. The cursor or the pointer can be moved to the predetermined position on the output screen according to an operation of the finger corresponding to the data input device. Specifically, the operation of the finger is output on the output screen according that a corresponding signal is output and the cursor or the pointer is moved on the basis of the output signal by using the finger position sensor capable of detecting one of three positions, such as right, left, and middle parts, of the finger rest unit, and a vertical switch (14) which can be switched by the vertical movement of the finger rest unit.

Since it is possible to move the cursor or the pointer at the moment when the finger touches the finger rest unit, a command to the cursor or the pointer is faster than the track ball or the electrostatic pat which needs an operation to designate a direction at the moment of being touched.

### (Configuration of finger rest unit)

The 'finger rest unit' defined in Claim 6 is not limited to the 'the unit formed so as to support the finger by two rotary bodies having the rotary axis extending in the longitudinal direction of the operating finger'.

### (Claim 7)

The invention according to Claim 7 defines the information equipment according to Claim 6.

That is, the data input device includes a finger rest unit slide mechanism capable of sliding the finger rest unit in the forward or backward direction of the operating finger; and a slide position detection sensor capable of detecting the slide position of the finger rest unit slide mechanism.

### (Operation and effect)

Since the data input device includes the finger rest unit slide mechanism and the slide position detection sensor, it is possible to directly move the cursor or the pointer in a vertical direction on the screen.

### (Claim 8)

The invention according to Claim 7 provides information equipment having an output screen which displays information on a screen; and an indication device capable of selecting and designating an option menu being displayed on the output screen.

The indication device is capable of transmitting an input signal according to the position touched by an operating finger or an operation performed by the finger, and includes: a finger rest unit on which the finger is placed, a finger position sensor capable of detecting one of three positions, such as right, left, and middle parts, of the finger rest unit touched by the finger, and a press switch (14) capable of switching by the vertical movement of the finger rest unit. The finger rest unit is formed so as to support the finger by two rotary bodies (1, 2) having a rotary axis extending in the longitudinal direction of the operating finger.

It is different from the invention according to Claims 6 and 7, in the invention according to Claim 8, an option menu or a selected and determined menu is displayed on the output screen of the information equipment instead of the cursor or the pointer. An operation of the selection or determination on the output screen depends on the output from the indication device.

### (Claim 9)

The invention according to Claim 9 defines the information equipment according to Claim 8. The indication device includes a finger rest unit slide mechanism capable of sliding the finger rest unit in the forward or backward direction of the operating finger; and a slide position detection sensor capable of detecting the slide position of the finger rest unit slide mechanism.

### (Operation and effect)

Since the indication device includes the finger rest unit slide mechanism and the slide position detection sensor, it is possible to dispose the option menu in a vertical direction on the output screen. Accordingly, it is possible to display more option menus. In addition, it is possible to directly perform the movement operation in the vertical direction or the selection operation on the screen with respect to the displayed option menu.

### (Claim 10)

The invention according to Claim 10 provides information equipment having: an output screen which displays information; and a character input device which displays a predetermined character on the output screen.

The character input device is capable of transmitting an input signal according to the position touched by an operating finger or an operation performed by the finger, and includes a finger rest unit on which the finger is placed, a finger position sensor capable of detecting one of three positions, such as right, left, and middle parts, of the finger rest unit touched by the finger, and a press switch (14) capable of switching by the vertical movement of the finger rest unit.

In addition, the finger rest unit is formed so as to support the finger by two rotary bodies (1, 2) having a rotary axis extending in the longitudinal direction of the operating finger. The output screen includes: a candidate character output unit capable of selecting a desired candidate character to be inputted based on the signal from the finger position sensor; and a determined character output unit which displays the selected and determined character on the output screen with respect to the candidate characters being displayed by the candidate character output unit on the basis of the signal from the press switch (14).

It is different from the invention according to Claim 8 that, in the invention according to Claim 10, a selectable character or a selected and determined character is displayed on the output screen of the information equipment instead of the optional menu or the selected and determined menu. An operation of the selection or determination on the output screen depends on the output from a character input device.

### (Claim 11)

The invention according to Claim 11 defines the information equipment according to Claim 10. The character input device includes a finger rest unit slide mechanism capable of sliding the finger rest unit in the forward or backward direction of the operating finger; and a slide position detection sensor capable of detecting the slide position of the finger rest unit slide mechanism.

### (Operation and effect)

Since the indication device includes the finger rest unit slide mechanism and the slide position detector, it is possible to dispose the selectable character in a vertical direction on the output screen. Accordingly, it is possible to display more selected characters. In addition, it is possible to directly perform the movement operation in the vertical direction or the selection operation on the screen with respect to the displayed selectable character.

### (Claim 12)

The invention according to Claim 12 provides a method of controlling information equipment having an output screen which displays information; and a data input device which moves a cursor or a pointer displayed on the output screen to the predetermined position.

The data input device is capable of transmitting an input signal according to the position touched by an operating finger or an operation performed by the finger, and includes: a finger rest unit on which the finger is placed, a finger position sensor capable of detecting one of three positions, such as right, left, and middle parts, of the finger rest unit touched by the finger, and a vertical switch switchable by the vertical movement of the finger rest unit.

The method of controlling the information equipment includes: receiving the output signal from the finger position sensor or the vertical switch; converting the received output signal to a movement command of the cursor or the pointer on the basis of a previously stored signal table; and outputting a control signal of the cursor or the pointer on the basis of the converted movement command.

### (Claim 13)

The invention according to Claim 13 defines the method of controlling the information equipment according to Claim 12. The finger rest unit is formed so as to support the finger by two rotary bodies (1, 2) having a rotary axis extending in the longitudinal direction of the operating finger. The data input device includes the rotation detection sensor (20) capable of detecting whether or not the two rotary bodies rotate, and in the receiving of the output signal, the output signal is received from the rotation detection sensor (20).

### (Operation and effect)

Since the data input device includes the rotation detection sensor (20) on the rotary bodies (1, 2), a rotation speed or rotational amount of the rotary bodies (1, 2) can be used as parameters when operating the information equipment. As a result, operation variations of the data input device and the information equipment can be increased.

### (Claim 14)

The invention according to a Claim 14 provides a method of controlling information equipment having an output screen which displays information on a screen; and an indication device capable of selecting and designating an option menu being displayed on the output screen.

The indication device is capable of transmitting an input signal according to the position touched by an operating finger or an operation performed by the finger, and includes: a finger rest unit on which the finger is placed, a finger position sensor capable of detecting one of three positions, such as right, left, and middle parts, of the finger rest unit touched by the finger, and a vertical switch switchable by the vertical movement of the finger rest unit.

In addition, the method of controlling the information equipment includes: receiving the output signal from the finger position sensor or the vertical switch; converting the received output signal to a selection-determination command of the option menu displayed on the output screen on the basis of a previously stored signal table; and controlling and executing corresponding information equipment on the basis of the converted selection-determination command.

### (Claim 15)

The invention according to a Claim 15 defines the method of controlling the information equipment according to Claim 14. The finger rest unit is formed so as to support the finger by two rotary bodies (1, 2) having a rotary axis extending in the longitudinal direction of the operating finger. The indication device includes a rotation detection sensor (20) capable of sensing whether or not the two rotary bodies rotate, and in the receiving of the output signal, the output signal is received from the rotation detection sensor (20).

Accordingly, operation variations of the indication device and the information equipment can be increased.

### (Claim 16)

The invention according to Claim 16 provides a method of controlling information equipment having an output screen which displays information; and a character input device which displays a predetermined character on the output screen.

The character input device is capable of transmitting an input signal according to the position touched by an operating finger or an operation performed by the finger, and includes: a finger rest unit on which the finger is placed, a finger position sensor capable of detecting one of three positions, such as right, left, and middle parts, of the finger rest unit touched by the finger, and a vertical switch switchable by the vertical movement of the finger rest unit.

The method of controlling the information equipment includes: receiving a signal from the finger position sensor; outputting a candidate character by converting the signal received from the finger position sensor on the basis of the previously stored candidate character table and displaying the candidate character to be inputted on the screen such that the candidate character can be selected; receiving a signal from the vertical switch; and outputting the determined character by converting the signal received from the vertical switch on the basis of a previously stored determination character table and displaying the selected and determined character on the output screen.

### (Claim 17)

The invention according to a Claim 17 defines the method of controlling the information equipment according to Claim 16. The finger rest unit is formed so as to support the finger by two rotary bodies having a rotary axis extending in the longitudinal direction of the operating finger. The character input device includes a rotation detection sensor capable of detecting whether or not the two rotary bodies rotate, and in the receiving of the signal, the output signal is received from the rotation detection sensor.

Accordingly, operation variations of the character input device and the information equipment can be increased.

### (Claim 18)

The invention according to Claim 18 provides a computer program for controlling information equipment which includes an output screen which displays information and a data input device which moves a cursor or a pointer displayed on the output screen to the predetermined position.

The data input device is capable of transmitting an input signal according to the position touched by an operating finger or an operation performed by the finger, and includes: a finger rest unit on which the finger is placed, a finger position sensor capable of detecting one of three positions, such as right, left, and middle parts, of the finger rest unit touched by the finger, and a vertical switch switchable by the vertical movement of the finger rest unit.

The program allows a computer included in the information equipment to execute: receiving the output signal from the finger position sensor or the vertical switch; converting the received output signal to a movement command of the cursor or the pointer on the basis of a previously stored signal table; and outputting a control signal of the cursor or the pointer on the basis of the converted movement command.

### (Claim 19)

The invention according to Claim 19 defines the computer program according to Claim 18.

That is, the finger rest unit is formed so as to support the finger by two rotary bodies having a rotary axis extending in the longitudinal direction of the operating finger. The data input device includes the rotation detection sensor capable of detecting whether or not the two rotary bodies rotate, and in the receiving of the output signal, the output signal is received from the rotation detection sensor.

### (Claim 20)

The invention according to Claim 20 provides a computer program for controlling information equipment having an output screen which displays information on a screen; and an indication device capable of selecting and designating an option menu being displayed on the output screen.

The indication device is capable of transmitting an input signal according to the position touched by an operating finger or an operation performed by the finger, and includes: a finger rest unit on which the finger is placed, a finger position sensor capable of detecting one of three positions, such as right, left, and middle parts, of the finger rest unit touched by the finger, and a vertical switch switchable by the vertical movement of the finger rest unit.

The program for controlling the information equipment allows a computer included in the information equipment includes: receiving the output signal from the finger position sensor or the vertical switch; converting the received output signal to a selection-determination command of the option menu displayed on the output screen on the basis of a previously stored signal table; and controlling the corresponding information equipment on the basis of the converted selection-determination command.

### (Claim 21)

The invention according to Claim 21 defines the computer program according to Claim 20.

That is, the finger rest unit is formed so as to support the finger by two rotary bodies having a rotary axis extending in the longitudinal direction of the operating finger. The indication device is capable of transmitting an input signal according to the position touched by an operating finger or an operation performed by the finger, and in the receiving of the output signal the output signal is received from the rotation detection sensor.

### (Claim 22)

The invention according to Claim 22 provides a computer program for controlling information equipment having an output screen which displays information; and a character input device which displays a predetermined character on the output screen.

The character input device is capable of transmitting an input signal according to the position touched by an operating finger or an operation performed by the finger, and includes: a finger rest unit on which the finger is placed, a finger position sensor capable of detecting one of three positions, such as right, left, and middle parts, of the finger rest unit touched by the finger, and a vertical switch switchable by the vertical movement of the finger rest unit.

The program allows a computer included in the information equipment to execute the steps of: receiving a signal from the finger position sensor; outputting a candidate character by converting the signal received from the finger position sensor on the basis of a previously stored candidate character table and displaying the candidate character to be inputted on the screen such that the candidate character can be selected; receiving a signal from a vertical switch; and outputting the determined character by converting the signal received from the vertical switch on the basis of a previously stored determination character table and displaying the selected and determined character on the output screen.

### (Claim 23)

The invention according to Claim 23 defines the computer program according to Claim 22.

That is, the program for controlling the information equipment allows a computer included in the information equipment including: receiving a signal from the finger position sensor; outputting a candidate character by converting the signal received from the finger position sensor on the basis of the previously stored candidate character table and displaying the candidate character to be inputted on the screen such that the candidate character can be selected; receiving a signal from the vertical switch; and outputting the determined character by converting the signal received from the vertical switch on the basis of a previously stored determination character table and displaying the selected and determined character on the output screen.

### (Driver software)

The computer program according to Claims 18 to 23 may be provided as driver software in addition to the pointing device, the indication device, or the character input device in the case that the data input device such as the pointing device, the indication device, or the character input device is provided being separated from the information equipment which is related to each of the devices respectively.

### Brief Description of the Drawings

Fig. 1 is a perspective view showing a type of usage according to a first embodiment of the invention.
Fig. 2 are a side view and a front view showing the type of usage according to the first embodiment of the invention.
Fig. 3 is a view for defining directions according to the invention.
Figs. 4 are front views showing a relationship between the position of a finger and a contact point according to the first embodiment of the invention.
Fig. 5 is a front view showing an embodiment capable of detecting a rotational angle of a rotary body.
Fig. 6 is a side view showing an embodiment capable of sliding the finger in forward and backward direction.
Fig. 7 is a view showing an operating process in a display of the information equipment connected to a data input device according to the invention.
Figs. 8 are side views showing an embodiment including a seesaw configuration in the forward and backward direction.
Figs. 9 are side views showing an embodiment including the rotary body in the forward and backward direction.
Figs. 10 are side views showing an embodiment including the seesaw configuration in the forward and backward direction.
Figs. 11 are side views showing an embodiment including a configuration for preventing an erroneous operation.
Figs. 12 are side views showing an embodiment including a member connecting to the finger between two rotary bodies.

### Best Mode for Carrying Out the Invention

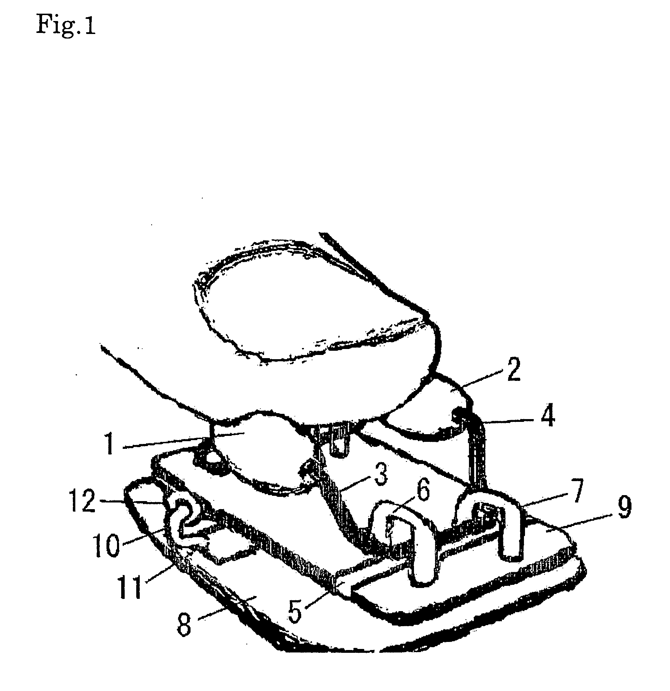

### (First embodiment: Figs. 1 to 4)

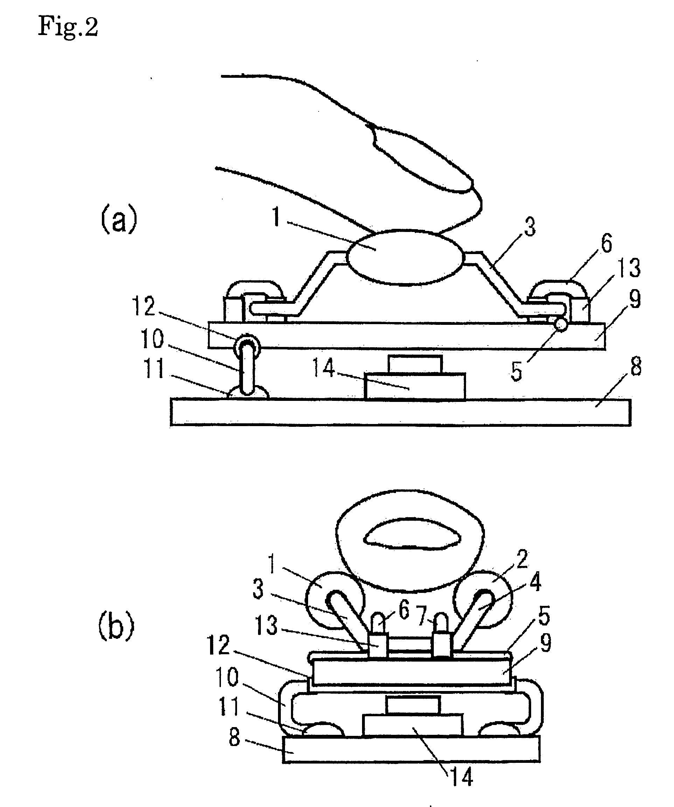

Fig. 1 is a perspective view showing a type of a data input device according to a first embodiment of the invention. Fig. 2 (a) is a side view showing the first embodiment of the invention. Fig. 2(b) is a front view showing the first embodiment of the invention.

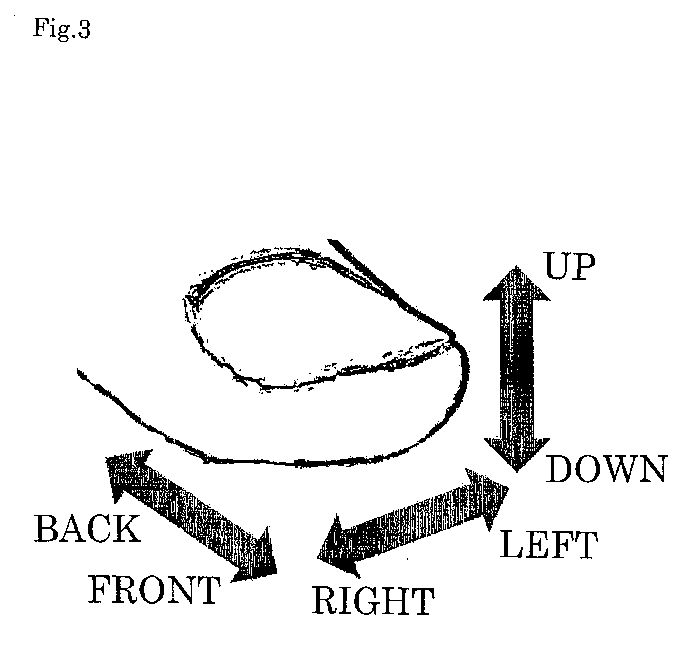

The data input device according to the invention is operated by a finger as shown in Fig. 3. It is designated that a palm side is 'down' and a fingernail side is 'up' on the finger. In addition, a fingertip direction is designated as 'forward side' or 'front' and a wrist side is designated as 'backward side' or 'back' on the basis of the finger (below, defined as an 'operating finger') which operates the data input device.

The data input device includes a base plate (8), a press switch (14) fixed to an upper surface of the base plate (8), a switch plate (9) disposed on the upper position facing the base plate (8) so as to turn on or turn off the press switch (14), and a member which is formed between two rotary bodies (a right rotary body 1 and a left rotary body 2) having a rotary axis extending in the longitudinal direction of the finger so as to support the operating finger of the switch plate (9).

The switch plate (9) includes hinges (10, 11, 12) at a back side of the operating finger. The hinges (10, 11, 12) are disposed on the upper position of the base plate (8) while being fixed to the back side of the operating finger on the base plate (8). That is, the hinges (10, 11, 12) include a hinge fixing member (11) fixed to the back side of the operating finger on the base plate (8), an arch-shaped hinge arch (10) fixed to be movable with respect to the hinge fixing member (11), and a bearing member (12) for fixing the hinge arch (10) to be movable by disposing the hinge arch (10) in the back side of the switch plate (9).

The member supporting the operating finger includes the two cylindrical rotary bodies (1, 2) whose centers are expanded in a longitudinal direction, rotary body support wires (right rotary body support wire 3 and left rotary body support wire 4) fixed and connected in a forward and backward direction of the switch plate (9) while passing through the axis direction of the rotary bodies (1, 2) so as to dispose the rotary bodies (1, 2) parallel on the upper side of the switch plate (9), and arch wires (right arch wire 6 and left arch wire 7) fixing the rotary body support wires (3, 4) with respect to the switch plate (9). Since the two rotary bodies (1, 2) and the rotary body support wires (3, 4) functions as one unit in correspondence to the operating finger, the two rotary bodies (1, 2) and the rotary body support wires (3, 4) are denoted as the 'finger rest unit', below. The member denoted as the 'wire' is formed of a metallic line capable of a plastic deformation process.

The arch wires (6, 7) support the rotary body support wires (3, 4) due to internal diameters being larger than outlines of the rotary body support wires (3, 4). That is, a clearance exists between the rotary body support wires (3, 4) and the arch wires (6, 7). For this reason, the rotary body support wires (3, 4) and the two rotary bodies (1, 2) supported by the rotary body support wires (3, 4) can move in a horizontal direction. In other words, a 'seesaw' structure is provided as the finger rest unit. A part which becomes a fulcrum of the seesaw is denoted as a right fulcrum (15) or a left fulcrum (16), respectively.

A switch wire (5) is fixed to a front upper surface on the switch plate (9) so as to pass through the inside of the arch wires (6, 7). The switch wire (5) is fixed to the position contacting the right fulcrum (15) and the left fulcrum (16) when the finger rest unit is inclined. In addition, the rotary body support wires (3, 4) in an unloaded condition are in contact with the right fulcrum (15), the left fulcrum (16), or the switch wire (5) by weight of the operating finger of the finger rest unit.

The rotary body support wires (3, 4), the switch wire (5), and the arch wires (6, 7) are formed of conductive materials. In addition, standing portions of the arch wires (6, 7) supporting the front side of the rotary body support wires (3, 4) and standing portions (13) of the arch wires (6, 7) supporting the back side of the rotary body support wires (3, 4) are coated with an insulating film. However, horizontal portions of the arch wires (6, 7) are not coated with the insulating film.

Since the standing portions of the arch wires (6, 7) are coated with the insulating film while the horizontal portions are not coated with the insulating film, a current does not flow through the standing portions (13) of the arch wires (6, 7) even though the standing portion (13) is in contact with the rotary body support wires (3, 4) or the switch wire (5). On the other hand, in the case when the two rotary bodies (1, 2) are inclined, the current flows if any one of the rotary body support wires (3, 4) is in contact with one of the horizontal portions of the arch wires (6, 7).

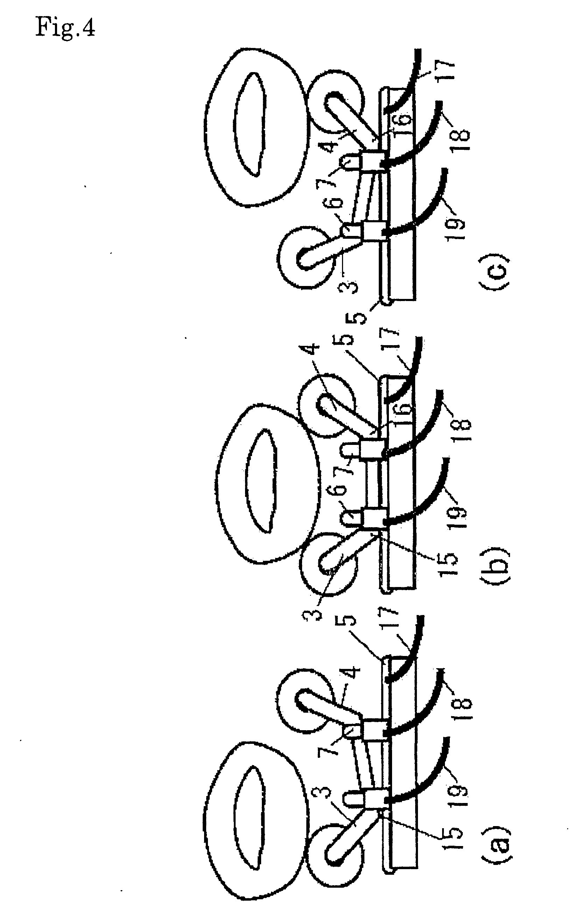

Fig. 4 shows wiring lines with respect to the 'finger rest unit'. A base conductive wiring line (17) is connected to the switch wire (5). A right conductive wiring line (19) is connected to the right arch wire (6) and a left conductive wiring line (18) is connected to the left arch wire (7).

### (Information equipment connected to data input device and control unit)

The data input device having the above-mentioned configuration is used by being connected to the information equipment which can be controlled by each signal output from the data input device. Any one of the data input devices, the information equipment, or an information transmitting equipment connecting the data input device and the information equipment should include a control unit so as to control the information equipment. The control unit includes a data conversion unit which converts an output of the sensors (contact points 5, 6, 7) and the vertical switch (14) provided to match a protocol recognizable by the information equipment. The control unit further includes an adjustment unit which adjusts the output converted by the data conversion unit to a signal (serial signal or parallel signal) corresponding to a transmission method of the information equipment. For example, when the information equipment is a personal computer, the control unit may include a data conversion unit or a forming unit capable of connecting to a USB port.

The control unit may be included in the data input device or the information equipment, or may be implemented by the software of the information equipment. The control unit includes a data table according to the combination of the output signal of the sensors (contact points 5, 6, 7) and press switch (14). The data table will be described below.

### (Operation according to first embodiment)

As shown in Fig. 4(a), if the operating finger is rested on the right rotary body (1), the finger rest unit is inclined toward the right part, the right fulcrum (15) comes in contact with the switch wire (5), and the left rotary body support wire (4) comes in contact with the left arch wire (7). Accordingly, the current is applied to the base conductive wiring line (17) and the left conductive wiring line (18). However, the current is not applied to the right conductive wiring line (19) because the right rotary body support wire (3) is coated by an insulator (13). According to the above-mentioned state, the control unit detects that the operating finger is inclined toward a right part with respect to the finger rest unit.

If the finger is rested to one of the three positions such as the right, left, and middle part of the finger rest unit and the finger move downward, the switch plate (9) is inclined so that the front part of the finger rest unit is pressed centrally on the hinges (10, 11, 12) and the press switch (14) is pressed by a bottom surface of the switch plate (9). Accordingly, the finger rest unit is turned on. The vertical movement as shown in Fig. 3 is detected by turning on or turning off the press switch (14) through the finger rest unit.

As shown in Fig. 4(c), when increasing pressure toward the left rotary body (2) while resting the finger between the two rotary bodies (1, 2), the finger rest unit is inclined toward the left part, and the right rotary body support wire (3) comes in contact with the right arch wire (6) while the left fulcrum (16) comes in contact with the switch wire (5). Accordingly, the current flows through the base conductive wiring line (17) and the right conductive wiring line (19). However, the current does not flow through the left conductive wiring line (18) because the left rotary body support wire (4) is coated with the insulator (13). According to the above-mentioned state, the control unit can detect that the operating finger is inclined toward a left part with respect to the finger rest unit.

As shown in Fig. 4(b), if the finger is rested between the two rotary bodies (1, 2) while horizontally maintaining the finger rest unit, the current does not flow through both the right conductive wiring line (19) and the left conductive wiring line (18). According to the above-mentioned state (current is not applied), the control unit can detect that the finger rest unit is not inclined toward any part. By the above-mentioned construction of the data input device, the switch switches because the center of the power added by the operating finger is different. Accordingly, it is possible to provide a data input device having low power consumption and manufactured at low cost as compared with an input device such as an electrostatic pad.

In this embodiment, the fingertip does not need to be in continuous contact with the rotary body because the position of the fingertip is detected on the basis of the center of the very little pressure added by the operating finger placed on the finger rest unit from the finger rest unit. Even when moving the finger after separating the fingertip from the rotary bodies (1, 2) and when the finger comes in contact with the rotary bodies (1, 2) again, the position of the fingertip can be reliably detected based on the center of the power added to the finger rest unit. Since the end of the operating finger can be freely separated from the rotary bodies (1, 2), the finger can move to the desired position at a high speed and input efficiency is increased.

Further, in respect to the configuration of the data input device, it is possible to switch while additionally decreasing the power with respect to the operating finger by using a switch in an optical or electrostatic capacitance manner instead of the conductive wire or the conductive wiring line.

### (Variation of first embodiment)

It has been described that the rotary body support wires (3, 4) come in contact with the right fulcrum (15), the left fulcrum (16), or the switch wire (5) in the unloaded condition (a state in which the operating finger is not touching) by weight of the finger rest unit. In addition, it is possible to detect whether the finger touches the finger rest unit or not. That is, it is preferable that a return spring which resists the weight of the finger rest unit is provided, the rotary body support wires (3, 4) of the unloaded condition touches the arch wires (6, 7), and the right conductive wiring line (19) and a current flows through the left conductive wiring line (18). However, the return spring should have little snapping power and also be able to discriminate from ON/OFF of the press switch (14) .

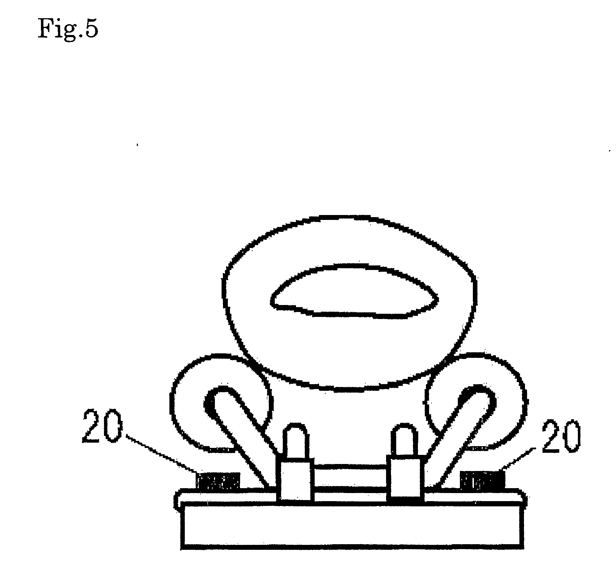

### (Fig. 5: detection of rotational amount of rotary body)

Fig. 5 shows an embodiment including horizontal rotation detection mechanism (20, 20) capable of optically detecting the rotational angle of the rotary bodies (1, 2). The optical position detection mechanism detects a movement direction and movement amount when moving a stripe pattern printed on the rotary bodies according to the rotation of the rotary bodies. The movement amount of the operating finger can be calculated by using the movement direction and the movement amount of the rotary bodies. A coordinate (pointing) can be designated as the same way of operating the track ball according to the related art when using the horizontal rotation detection mechanism (20, 20).

Further, there are two points mainly different from the track ball according to the related art. First, the data input device according to the invention can detect whether the position touched by the finger at a moment when the finger is rested on the finger rest unit is in the middle or the position is inclined toward the right fulcrum (15) or the left fulcrum (16). The track ball according to the related art can detect the right or left part by rotating the track ball after being touched but it can not detect the right or left part at the moment when the finger is touched.

Second, it is a click operation. The track ball is clicked by pressing a single click button. However, the data input device according to the invention can discriminate the touch position into the three positions as soon as the operating finger touches and can press the press switch (14) in the touched position. Accordingly, the data input device can be a device having three click buttons.

### (Fig. 6)

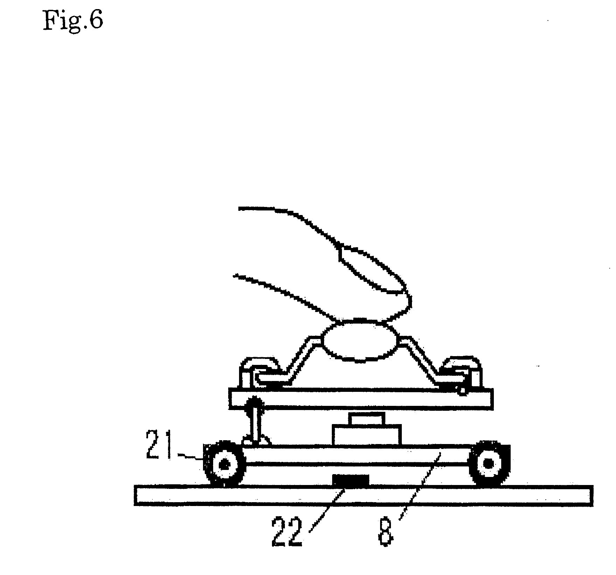

In the embodiment described in Fig. 5, since a rotation direction of the rotary bodies (1, 2) is limited to one dimension in the horizontal direction, it is possible to designate only the coordinate of the horizontal direction even though the rotational amount is detected. There, Fig. 6 shows an embodiment so as to designate the coordinate in a forward and backward direction.

In this embodiment, a base plate moving roller (21), and a backward direction, and a forward and backward direction position detection mechanism (22) are provided. The base plate moving roller (21) is capable of moving the base plate (8) in the forward or backward direction. The forward and backward direction position detection mechanism (22) is capable of optically detecting the movement amount of the base plate (8) by the base plate moving roller (21). In addition, although not shown in the drawing, a moving range of the base plate moving roller (21) is limited to a physical configuration so as to be included in the predetermined range.

According to this embodiment, the coordinate is designated in the horizontal direction by the rotation of the rotary bodies (1, 2) and the coordinate is designated in the forward or backward direction by the sliding movement of the base plate (8). As such, since the operating sense of touch in the rotation is different from the operating sense of touch in the sliding movement, the horizontal directional movement and the forward or backward directional movement are operated by being distinguished according to the sense of touch with respect to the cursor operated by the data input device. Accordingly, the problem in the operation may be difficult to generate and the data input device works well.

In another embodiment shown in Fig. 5, only the rotation direction of the rotary bodies (1, 2) and the corresponding relative rotational amount are detected because an absolute rotational angle of the rotary bodies (1, 2) can not be calculated by using only the optical horizontal rotation detection mechanism (20). Accordingly, it is not possible to detect the absolute rotation position of the operating finger if the base position of the operating finger cannot be detected by using an additional unit. However, since it is possible to detect the absolute position of the finger by distinguishing the absolute position of the fingertip in the embodiment shown in Fig. 4. It is also possible to designate a plurality of information by combining the relative movement amount and the movement direction of the operating finger which is obtained by detecting the rotational angle by the horizontal rotation detection mechanism (20) shown in Fig. 5.

For example, at each of the three positions which can be detected by the seesaw mechanism of the finger rest unit shown in Fig. 4, if it is possible to calculate the rotational angle according to the horizontal rotation detection mechanism (20) shown in Fig. 5 and discriminate the three kinds of movement of the fingertip: 'movement to the left direction', 'movement to the right direction', and 'no movement', nine kinds of information can be designated by combining the three kinds of positions and the three kinds of movement. For example, the movement direction and the movement amount of the finger can be recognized if it is possible to grasp the rotation direction and the rotational amount of the rotary bodies (1, 2) detected at a predetermined time or until the pressure is released after detecting that the fingertip of the operating finger applies the pressure to the rotary bodies (1, 2).

The invention will be compared with a button operation called as drag and drop according to an input device (for example, a mouse) of the related art. With the mouse, the input information is designated according to two points such as a drag starting point and a drop point of the pointer position. However, the data input device according to the invention can designate the input information according to any one of the contact points such as the right, left, and middle part touched by the operating finger with respect to the finger rest unit and a movement direction of the operating finger at the touched point. It is different from the operation in that turning on the press switch (14) by moving the operating finger in the horizontal direction and pressing in a vertical direction, such that it is possible to directly move the operating finger in an oblique direction. For this reason, it is possible to implement a high speed input operation.

### (Fig. 7)

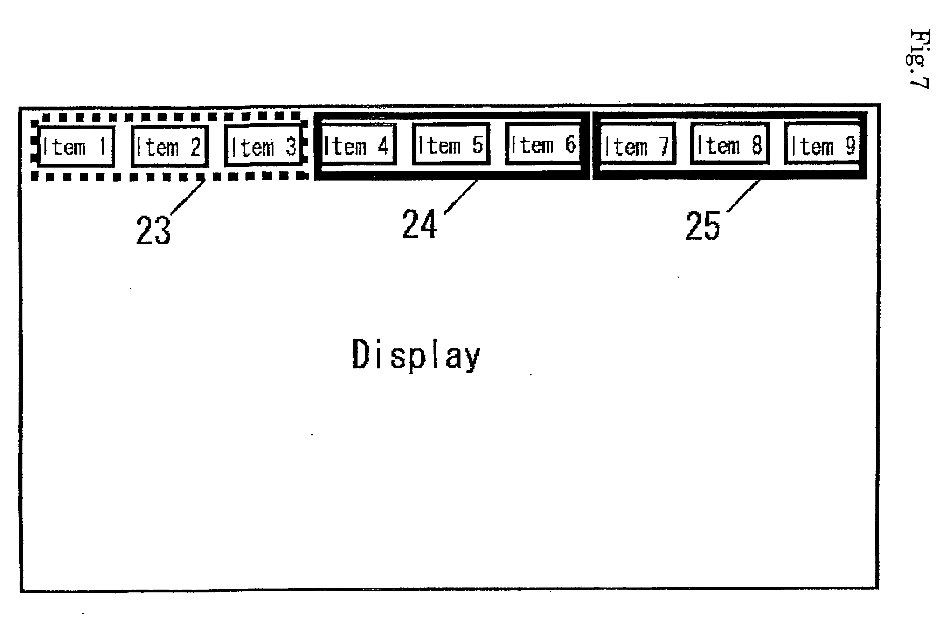

Fig. 7 shows a process for selecting one desired menu on a display of the information equipment operated in accordance with the input data of the corresponding data input device by operating a button of the data input device according to the invention among the nine kinds of menus.

First, the nine kinds of menus are continuously displayed in a horizontal direction on the display of the information equipment operated in accordance with the input data of the data input device. The menus are divided as groups (23, 24, 25) at every adjacent three menus.

The operating finger selects the predetermined position from the rested position (three right, middle, and left parts) on the finger rest unit using a horizontal seesaw configuration. Accordingly, one of the groups (23, 24, 25) can be selected. At this time, it is assumed that the left group (23) is selected among the three groups (left group 23, middle group 24, and right group 25). The screen of the information equipment displays that the left group (23) is selected. Fig. 7 shows the group by a one-dot-broken line.

Continuously, on the screen of the information equipment, the operating finger selects to move to the left part, to the right part, or not to move the operating finger. In the case of the operating finger moving to the right part, the horizontal rotation detection mechanism (20) detects that the right rotary body (2) is rotated. And then, the right menu from the center of the left group (23), that is, Item 3 is selected by pressing the press switch (14).

In addition, it is possible to use an interface selecting an additionally divided menu when the finger separates after pressing the press switch (14).

Until now, the method of selecting the horizontal menu on the display has been described with reference to Fig. 7. A method of selecting a vertical menu on the display is as follows.

First, the data input unit it needs to use an embodiment capable of moving the finger rest unit in a forward or backward direction. For example, it corresponds to the embodiment with reference to Fig. 6.

In this embodiment, the operating finger is rested on the finger rest unit, the finger selects a desired position among the fingertip side (forward direction), a wrist side (backward direction), and a middle side and presses the press switch (14). At this time, the operating finger selects one of the three menus disposed in the vertical direction. If the selected menu is grouped as the example shown in Fig. 7, a desired menu is selected from the grouped menu by changing a separating position of the press switch (14).

### (Data table)

The data input device related to the embodiment shown in Fig. 4 compositively uses the turning on/off state of the press switch (14) and the current to contact points (6, 7). Specifically, the pressing position (three parts such as right, left, and middle part) of the operating finger to the contact points (6, 7), the depressing position from the contact points (6, 7) when the operating finger separates from the turning on state of the press switch (14), and the movement direction of the horizontal, forward, or backward direction on the basis of the pressing position are detected. The movement direction is calculated by a relative relationship between the pressing position and the depressing position. In addition, the movement speed is calculated by a period of time according to the change of the states of applying the current to contact points (6, 7).

In addition, there is the case capable of additionally calculating the movement amount.

The result detected by the data input device is sent to a control program as a signal and determines operations (D1 to D27) of the program corresponding to the sent signal according to a table as shown below.

First, the configuration embodiment in Fig. 3 uses a table in the following example when detecting the pressing position and the depressing position of the operating finger in the state that current flows the contact points (6, 7, 3, 4) and in the state of turning on/off the press switch (14).

| pressing position of the finger depressing position of the finger | left | middle | right |
|---|---|---|---|
| left | D1 | D2 | D3 |
| middle | D4 | D5 | D6 |
| right | D7 | D8 | D9 |

In the embodiment of the configuration in Fig. 5, the pressing position is detected by the state of applying a current to the contact points (6, 7, 3, 4) and the state of turning on/off the press switch (14). In case of detecting the movement direction of the horizontal position detection mechanism (20), the table below can be used.

| pressing position of the finger movement direction of the finger | left | middle | right |
|---|---|---|---|
| left | D10 | D11 | D12 |
| middle | D13 | D14 | D15 |
| right | D16 | D17 | D18 |

In addition, the embodiment of the configuration in Fig. 3, detects the period of time according to the change of the state of applying a current to the contact points (6, 7, 3, 4). However, in the embodiment of the configuration in Fig. 5, if the speed of the moving strip pattern of the rotary bodies (1, 2) can be detected, the information of the movement speed of the operating finger can be used in the table below.

| movement direction of the finger movement speed of the finger | left | stand | right |
|---|---|---|---|
| stand | D19 | D20 | D21 |
| slow | D22 | D23 | D24 |
| fast | D25 | D26 | D27 |

### (Alphabet input)

In the case of inputting the Alphabet will be simply explained by using the above-described data table.

When inputting first,
all of D1, D4, and D5 designate a left area of a keyboard.
all of D2, D5, and D8 designate a middle area of the keyboard.
all of D3, D6, and D9 designate a right area of the keyboard.

When inputting second, one of the nine kinds of alphabets located in the area designated at the first input is discriminated from the D1 to D9 and inputted.

### (Scroll operation)

In the case of a scroll operation will be simply explained by using the same data table.

D20 is used when selecting information of the cursor position.

D22 is used when slowly moving the cursor in a left direction.

D24 is used when slowly moving the cursor in a right direction.

D25 is used when moving the cursor quickly in the left direction.

D27 is used when moving the cursor quickly in the left direction.

### (Tactual member)

In order to cause the operating finger to tactually grasp the relative position in back and forth direction, preferably, a member that can grasp the relative position of the operating finger or another finger for holding the device in back and forth direction is provided. For example, by using a projection which projects in a manner according to the position of the fingertip in back and forth direction, tactual stimulation can be applied. A structure for tactual stimulation may be a structure which is disposed at the back of the data input device (that is, on the rear side where the operating finger is located) so as to apply the tactual stimulation to a finger holding the data input device.

### (Rear tactual member)

A case in which a big finger is used as the operating finger of the data input device according to the invention will be described. On the rear side of the data input device, a tactual button for stimulating a sense of touch is provided.

When the button is pressed with an index finger or a middle finger from the rear side of the data input device, by moving the big finger to the front side of the device to be located at a position just above the position where the button is pressed on the rear side, and by causing the big finger to stop a pressure to be applied when the button is pressed from the rear side (causing force canceling force applied from the rear side to be applied from the front side), the press operation of the button on the rear side is easily performed.

When the embodiment shown in Fig. 6 is adopted, in order to move the finger rest unit on the front side of the device in back and forth direction while tactual stimulation is applied, the following structure is used. That is, the big finger is put on the finger rest unit as the operating finger, and the finger rest unit moves in back and forth direction so as to be brought up to the position where the tactual stimulation button on the rear side is operated. To this end, the tactual stimulation button may be disposed on the rear side of the data input device, which corresponds to the movement range of the operating finger.

### (Fig. 8)

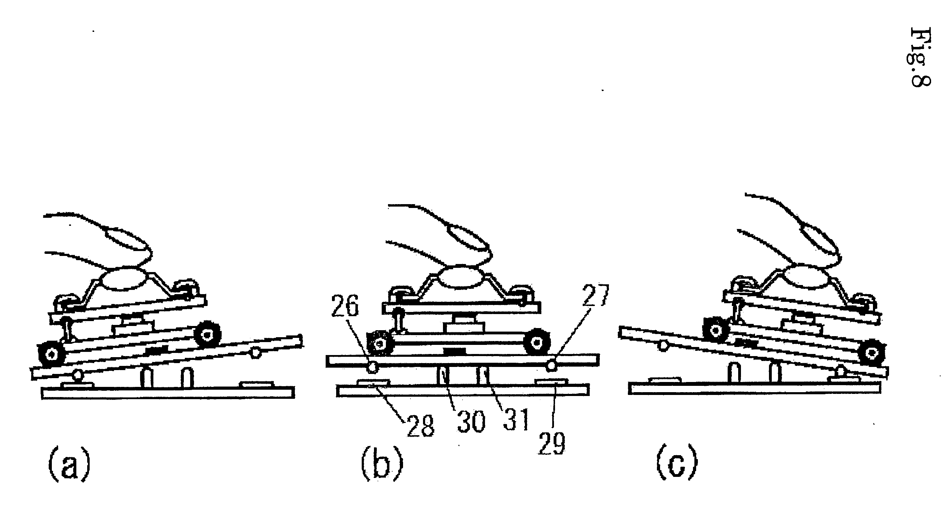

In an embodiment shown in Fig. 8, a function is further added to the embodiment shown in Fig. 6. That is, below the base plate moving roller (21) and the front and back position detection mechanism (22), a seesaw structure is provided so as to ensure three positions in back and forth direction.

On a plate material serving as the base of the seesaw structure in back and forth direction, two fulcrums (30, 31) are fixed in the vicinity of the center. By moving the position of the center of gravity of the entire data input device of the invention around the fulcrums (30, 31) by the operating finger, three kinds of positions, that is, a position inclined toward the operator (Fig. 8(a)), a position inclined away from the operator (Fig. 8(c)), and a horizontal position (Fig. 8(b)), can be ensured. In order to detect the three kinds of positions, on the plate material serving as the base of the seesaw structure, switch contacts (28, 29) are provided. In addition, on the rear side of the plate material supporting the base plate moving roller (21), switch contacts (26, 27) are provided so as to correspond to the switch contacts (28, 29).

### (Fig. 9)

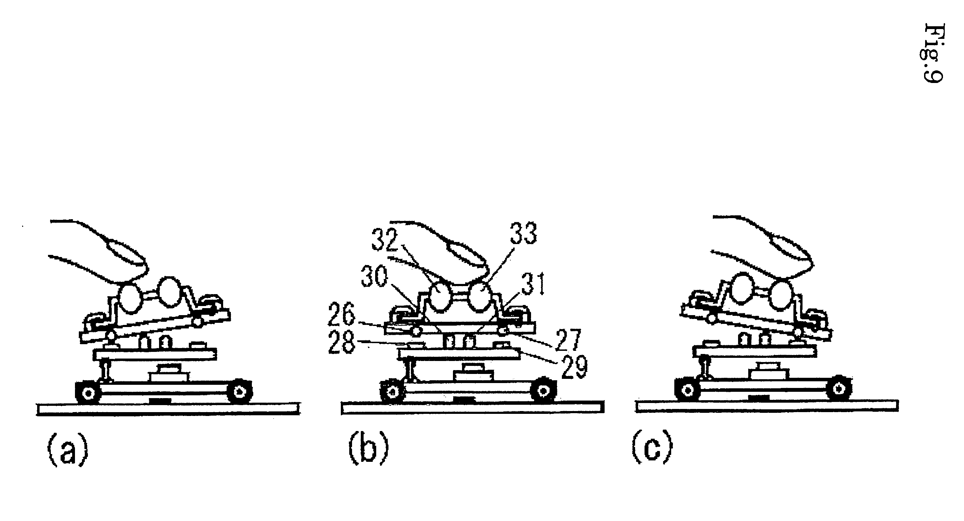

In an embodiment shown in Fig. 9, the positions of the seesaw structure shown in Fig. 8 and the press switch (14) are changed with each other, and rotary bodies (32, 33) are individually provided on front and back sides, instead of the rotary bodies (1, 2) individually provided the left and right sides.

According to this embodiment, with the sense of touch by the operating finger against the rotary bodies (32, 33) individually provided on the front and back sides, it is easy to distinguish to which of the front and back sides a pressure is applied. Like the embodiment shown in Fig. 4 in which the left and right directions are distinguished, in this embodiment, the data input is performed while three kinds of positions, that is, a position inclined toward the operator (Fig. 9(a)), a position inclined away from the operator (Fig. 9(c)), and a horizontal position (Fig. 9(b)), are distinguished by the sense of touch against the rotary bodies (32, 33). The three kinds of positions are distinguished by signals which are generated due to different contact states of the switch contacts (26, 27, 28, 29).

### (Fig. 10)

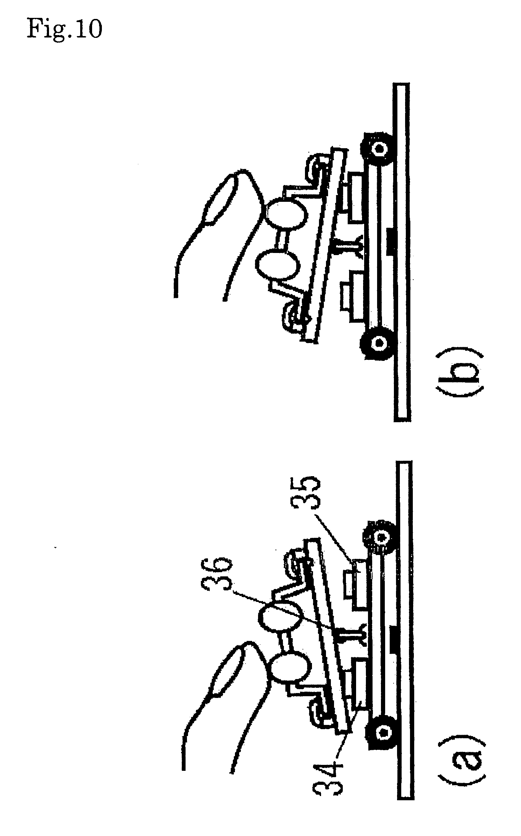

An embodiment shown in Fig. 10 has a simple structure used in the case in which the horizontal position from the positions in back and forth direction does not need to be distinguished, and only two kinds of positions are distinguished. That is, a single fulcrum (36) for supporting the seesaw structure in back and forth direction is provided, and switches (34, 35) that can detect a position toward the operator (Fig. 10(a)) and a position away from the operator (Fig. 10(c)) are provided.

### (Fig. 11)

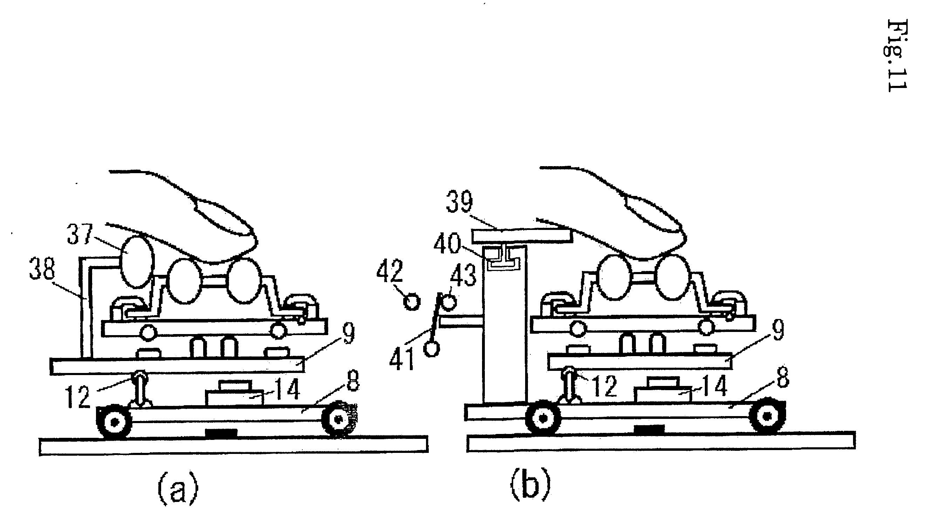

An embodiment shown in Fig. 11 is an embodiment showing a structure for preventing an erroneous operation.

In an embodiment shown in Fig. 11(a), a pillar (38) is provided upright in a reverse L shape from the side of a switch plate (9) toward the operator, and a finger support rotary body (37) is rotatably supported to a front end of the pillar (38). The finger support rotary body (37) has a horizontal portion of the pillar (38) as a rotary axis, and is configured to slide in horizontal direction (a direction perpendicular to the paper in Fig. 11). For this reason, it is possible to smoothly move a part of the operating finger disposed on the finger support rotary body (37).

Since the finger support rotary body (37) supported with the pillar (38) is located on a bearing member (12), even when the operating finger applies great force to the finger support rotary body (37), there is no case in which the press switch (14) is pressed. According to this configuration, the erroneous operation of the switch (14) is easily prevented.

In an embodiment shown in Fig. 11(b), a horizontal width of the pillar (38) in the embodiment shown in Fig. 11(a) is ensured, and a finger support stand (39), instead of the finger support rotary body (37), is provided. Further, the finger support stand (39) is configured to move along a rail (40) provided in a horizontal direction. In addition, a switch (41), which is switched in back and forth direction of the pillar, and contacts (42, 43) are provided.

Further, since the finger support stand (39) is located just on the bearing member (12), even when the operating finger applies great force to the finger support stand (39), there is no case in which the press switch (41) is pressed. According to this configuration, when the finger moves in back and forth direction or in the horizontal direction, by moving the center of gravity of the finger to the finger support stand (39), force is prevented from being applied downward, and thus the erroneous operation of the switch (14) is easily prevented.

In addition, if the center of gravity of the finger is located on the finger rest unit or the finger support stand (39), the reaction when the switch (41) of the finger support stand (39) is operated is absorbed through the center of gravity, thereby preventing an erroneous input.

Moreover, since the finger support rotary body (37) and the finger support stand (39) do not move in the vertical direction, when a pressure is applied to the finger rest unit while the part of the operating finger is get on the finger support rotary body (37) or the finger support stand (39), a pressure needs to be applied by using another part (fingertip or the like) of the finger moving in the vertical direction. Further, a slide mechanism in back and forth direction is also provided so as to follow the movement of the operating finger in back and forth direction. Therefore, the finger support rotary body (37) and the finger support stand (39) can rotate or move following the movement of the operating finger in back and forth direction, and does not cause a trouble in the movement of the fingertip in back and forth direction.

### (Variation of embodiment of Fig. 11)

Further, the movement amounts of the finger rest unit and the finger support stand (39) may be detected, and the coordinates may be assigned on the basis of the movement amounts.

In addition, by pivoting the finger support rotary body (37) and by providing a projection projecting from the finger support stand (39), a sense of touch to the operating finger may be stimulated, and a position of the fingertip in back and forth direction may be noticed.

Moreover, in the embodiment of Fig. 11, the lower part of the big finger is supported with the finger support rotary body or the finger support stand. However, the lower part of the big finger (the side close to the root) is not necessarily supported, and the side close to the front end may be supported.

### (Fig. 12)

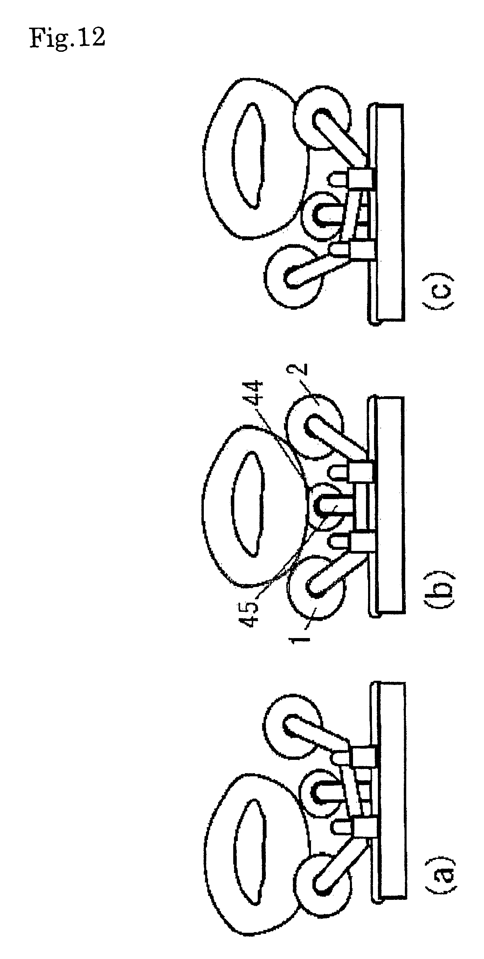

An embodiment of Fig. 12 will be described. In this embodiment, in addition to the configuration of the embodiment shown in Fig. 2, relative position tactual members (44, 45) to be brought into contact with the finger located between the two rotary bodies (1, 2) are provided between the two rotary bodies (1, 2). The relative position tactual members (44, 45) has a cylindrical body (44), which is smaller than the rotary bodies (1, 2), and a rotary axis (45) in parallel with the rotary axes of the rotary bodies (1, 2). The relative position tactual members (44, 45) are fixed so as not to move against the inclination of the seesaw unit or the movement of the finger rest unit in back and forth direction by the slide mechanism in back and forth direction shown in Fig. 6 or the like.

The operating finger feels the cylindrical body (44) as a convex portion when the rotary bodies (1, 2) rotate, or a tactual position moves front and back by the movement of the finger rest unit in back and forth direction. That is, it is possible to grasp the position of the operating finger by a difference in sense of touch.

By pivoting the rotary body or the projection provided separately in the vertical or horizontal direction while the operating finger moves, it becomes possible to identify more clearly the finger position. At this time, as compared with a case in which all the rotary bodies constituting a rotary body array are integrally formed and pivot in the same direction by the same amount, when the individual rotary bodies pivot in different manners, the tactual stimulation is more clearly felt. For example, when the seesaw unit is inclined, if a gap between the right rotary body (1) and the cylindrical body (44) and a gap between the left rotary body (2) and the cylindrical body (44) are changed, the operating finger can clearly feel the difference in unevenness by the change.

In general, a human sense, in particular, the sense of touch, is sensitive to the relative change of stimulation, and, if the rotary bodies (1, 2) move with the difference in the vertical or horizontal direction, the sense is refreshed, and thus the sense of touch becomes clear. In the configuration example of Fig. 4, if the operating finger moves in the horizontal direction, the heights of the rotary bodies (1, 2) to be brought into contact with the finger are changed, and thus the stimulation becomes clear. In the embodiment shown in Fig. 12, this effect is further clear. For example, if the rotary bodies (1, 2) move in sequence of (a), (b), (c) of Figs. 12 according to the change of the position of the center of gravity of a pressure applied from the operating finger, the gaps between the rotary body (44) and the rotary bodies (1, 2) become different. Further, when the operating finger move left or right and presses one of the rotary bodies (1, 2), the rotary body (44) functions as a block for preventing the operating finger from being brought into contact with the opposing rotary body.

### (Gap adjustment structure of rotary body)

The gap between the two rotary bodies (1, 2) must be narrower than the width of the operating finger. Therefore, according to the size of the operating finger, a suitable gap may exist. For this reason, a mechanism or a structure for performing the adjustment of the gap may be provided.

On the other hand, if the rotary body (44) exists, a small finger can be used as the operating finger. In this case, even when a person has a small frame and a small finger, the finger cannot be missed into a valley of the two rotary bodies (1, 2), and the operation can be easily performed.

### (Variation)

The data input device described above is suitable for realizing miniaturization, as compared with a related art input device (for example, a cross key). In addition, the data input device can be operated in wireless manner with no power by supplying power through electric waves from the outside in the same manner as a wireless IC card or a wireless IC tag.

Further, if the rotary bodies (1, 2) are formed of luminescent materials, high visibility can be realized in the dark, and illumination power can be saved.

## Claims

1. A data input device transmitting an input signal according to the position touched by an operating finger and an operation performed by the finger, comprising:
a finger rest unit on which the finger is placed;
a finger position sensor capable of detecting one of three positions, such as right, left, and middle parts, of the finger rest unit touched by the finger; and
a vertical switch switchable by the vertical movement of the finger rest unit,
wherein the finger rest unit is formed so as to support the finger by two rotary bodies having a rotary axis extending in the longitudinal direction of the operating finger.

2. The data input device according to Claim 1, further comprising:
a rotation detection sensor capable of detecting whether or not the two rotary bodies rotate.

3. The data input device according to Claim 1 or 2,
wherein the finger rest unit includes a relative position tactual member capable of touching the finger located between the two rotary bodies of the finger rest unit.

4. The data input device according to any one of Claims 1 to 3, further comprising:
a finger rest unit slide mechanism capable of sliding the finger rest unit in the forward or backward direction of the operating finger; and
a slide position detection sensor capable of detecting the slide position of the finger rest unit slide mechanism.

5. The data input device according to any one of Claims 1 to 4, further comprising:
a data conversion unit that converts an output of each sensor and an output of the vertical switch so as to match a protocol recognizable by information equipment; and
an adjustment unit that adjusts the output converted by the data conversion unit to a signal corresponding to a method for transmission to the information equipment.

6. Information equipment comprising:
an output screen which displays information; and
a data input device which moves a cursor or a pointer displayed on the output screen to the predetermined position,
wherein the data input device is capable of transmitting an input signal according to the position touched by an operating finger or an operation performed by the finger, and includes: a finger rest unit on which the finger is placed, a finger position sensor capable of detecting one of three positions, such as right, left, and middle parts, of the finger rest unit touched by the finger, and a vertical switch switchable by the vertical movement of the finger rest unit, and
wherein the finger rest unit is formed so as to support the finger by two rotary bodies having a rotary axis extending in the longitudinal direction of the operating finger.

7. The information equipment according to Claim 6,
wherein the data input device includes a finger rest unit slide mechanism capable of sliding the finger rest unit in the forward or backward direction of the operating finger; and a slide position detection sensor capable of detecting the slide position of the finger rest unit slide mechanism.

8. Information equipment comprising:
an output screen which displays information on a screen; and
an indication device capable of selecting and designating an option menu displayed on the output screen,
wherein the indication device is capable of transmitting an input signal according to the position touched by an operating finger or an operation performed by the finger, and includes:
a finger rest unit on which the finger is placed,
a finger position sensor capable of detecting one of three positions, such as right, left, and middle parts, of the finger rest unit touched by the finger, and
a vertical switch switchable by the vertical movement of the finger rest unit,
wherein the finger rest unit is formed so as to support the finger by two rotary bodies having a rotary axis extending in the longitudinal direction of the operating finger.

9. The information equipment according to Claim 8,
wherein the indication device includes a finger rest unit slide mechanism capable of sliding the finger rest unit in the forward or backward direction of the operating finger; and a slide position detection sensor capable of detecting the slide position of the finger rest unit slide mechanism.

10. Information equipment comprising:
an output screen which displays information; and
a character input device which displays a predetermined character on the output screen,
wherein the character input device is capable of transmitting an input signal according to the position touched by an operating finger or an operation performed by the finger, and includes:
a finger rest unit on which the finger is placed,
a finger position sensor capable of detecting one of three positions, such as right, left, and middle parts, of the finger rest unit touched by the finger, and
a vertical switch switchable by the vertical movement of the finger rest unit,
wherein the finger rest unit is formed so as to support the finger by two rotary bodies having a rotary axis extending in the longitudinal direction of the operating finger, and
wherein the output screen includes:
a candidate character output unit capable of selecting a desired candidate character inputted based on the signal from the finger position sensor; and
a determined character output unit which displays the selected and determined character on the output screen with respect to the candidate characters displayed by the candidate character output unit on the basis of the signal from the vertical switch.

11. The information equipment according to Claim 10,
wherein the character input device includes:
a finger rest unit slide mechanism capable of sliding the finger rest unit in the forward or backward direction of the operating finger; and
a slide position detection sensor capable of detecting the slide position of the finger rest unit slide mechanism.

12. A method of controlling information equipment having an output screen which displays information and a data input device which moves a cursor or a pointer displayed on the output screen to the predetermined position, the method comprising the steps of:
receiving an output signal from a finger position sensor or a vertical switch;
converting the received output signal to a movement command of the cursor or the pointer on the basis of a previously stored signal table; and
outputting a control signal of the cursor or the pointer on the basis of the movement command obtained by converting the received output signal,
wherein the data input device is capable of transmitting an input signal according to the position touched by an operating finger or an operation performed by the finger, and includes: a finger rest unit on which the finger is placed, the finger position sensor capable of detecting one of three positions, such as right, left, and middle parts, of the finger rest unit touched by the finger, and the vertical switch switchable by the vertical movement of the finger rest unit.

13. The method according to Claim 12,
wherein the finger rest unit is formed so as to support the finger by two rotary bodies having a rotary axis extending in the longitudinal direction of the operating finger,
the data input device includes the rotation detection sensor capable of detecting whether or not the two rotary bodies rotate, and
in the receiving of the output signal, the output signal is received from the rotation detection sensor.

14. A method of controlling information equipment having an output screen which displays information on a screen and an indication device capable of selecting and designating an option menu displayed on the output screen, the method comprising the steps of:
receiving an output signal from a finger position sensor or a vertical switch;
converting the received output signal to a selection-determination command of the option menu displayed on the output screen on the basis of a previously stored signal table; and
controlling and executing the information equipment on the basis of the converted selection-determination command obtained by converting the received output signal,
wherein the indication device is capable of transmitting an input signal according to the position touched by an operating finger or an operation performed by the finger, and includes: a finger rest unit on which the finger is placed, the finger position sensor capable of detecting one of three positions, such as right, left, and middle parts, of the finger rest unit touched by the finger, and the vertical switch switchable by the vertical movement of the finger rest unit.

15. The method according to Claim 14,
wherein the finger rest unit is formed so as to support the finger by two rotary bodies having a rotary axis extending in the longitudinal direction of the operating finger,
the indication device includes a rotation detection sensor capable of detecting whether or not the two rotary bodies rotate, and
in the receiving of the output signal, the output signal is received from the rotation detection sensor.

16. A method of controlling information equipment having an output screen which displays information and a character input device which displays a predetermined character on the output screen, the method comprising the steps of:
receiving a signal from the finger position sensor;
outputting a candidate character by converting the signal received from the finger position sensor on the basis of a previously stored candidate character table and displaying the candidate character to be inputted on the screen such that the candidate character can be selected;
receiving a signal from the vertical switch; and
outputting the determined character by converting the signal received from the vertical switch on the basis of a previously stored determination character table and displaying the selected and determined character on the output screen,
wherein the character input device is capable of transmitting an input signal according to the position touched by an operating finger or an operation performed by the finger, and includes: a finger rest unit on which the finger is placed, the finger position sensor capable of detecting one of three positions, such as right, left, and middle parts, of the finger rest unit touched by the finger, and the vertical switch switchable by the vertical movement of the finger rest unit,

17. The method according to Claim 16,
wherein the finger rest unit is formed so as to support the finger by two rotary bodies having a rotary axis extending in the longitudinal direction of the operating finger,
the character input device includes a rotation detection sensor capable of detecting whether or not the two rotary bodies rotate, and
in the receiving of the signal, the output signal is received from the rotation detection sensor.

18. A computer program for controlling information equipment having an output screen which displays information and a data input device which moves a cursor or a pointer displayed on the output screen to the predetermined position, the program allowing a computer included in the information equipment to execute the steps of:
receiving an output signal from a finger position sensor or a vertical switch;
converting the received output signal to a movement command of the cursor or the pointer on the basis of a previously stored signal table; and
outputting a control signal of the cursor or the pointer on the basis of the converted movement command,
wherein the data input device is capable of transmitting an input signal according to the position touched by an operating finger or an operation performed by the finger, and includes: a finger rest unit on which the finger is placed, the finger position sensor capable of detecting one of three positions, such as right, left, and middle parts, of the finger rest unit touched by the finger, and the vertical switch switchable by the vertical movement of the finger rest unit,

19. The computer program according to Claim 18,
wherein the finger rest unit is formed so as to support the finger by two rotary bodies having a rotary axis extending in the longitudinal direction of the operating finger,
the data input device includes the rotation detection sensor capable of detecting whether or not the two rotary bodies rotate, and
in the receiving of the output signal, the output signal is received from the rotation detection sensor.

20. A computer program for controlling information equipment having an output screen which displays information on a screen and an indication device capable of selecting and designating an option menu being displayed on the output screen, the program allowing a computer included in the information equipment to execute the steps of:
receiving an output signal from a finger position sensor or a vertical switch;
converting the received output signal to a selection-determination command of the option menu displayed on the output screen on the basis of a previously stored signal table; and
controlling the information equipment on the basis of the converted selection-determination command,
wherein the indication device is capable of transmitting an input signal according to the position touched by an operating finger or an operation performed by the finger, and includes: a finger rest unit on which the finger is placed, the finger position sensor capable of detecting one of three positions, such as right, left, and middle parts, of the finger rest unit touched by the finger, and the vertical switch switchable by the vertical movement of the finger rest unit.

21. The computer program according to Claim 20,
wherein the finger rest unit is formed so as to support the finger by two rotary bodies having a rotary axis extending in the longitudinal direction of the operating finger,
the indication device is capable of transmitting an input signal according to the position touched by an operating finger or an operation performed by the finger, and
in the receiving of the output signal, the output signal is received from the rotation detection sensor.

22. A computer program for controlling information equipment having an output screen which displays information and a character input device which displays a predetermined character on the output screen, the program allowing a computer included in the information equipment to execute the steps of:
receiving a signal from the finger position sensor;
outputting a candidate character by converting the signal received from the finger position sensor on the basis of a previously stored candidate character table and displaying the candidate character to be inputted on the screen such that the candidate character can be selected;
receiving a signal from a vertical switch; and
outputting the determined character by converting the signal received from the vertical switch on the basis of a previously stored determination character table and displaying the selected and determined character on the output screen,
wherein the character input device is capable of transmitting an input signal according to the position touched by an operating finger or an operation performed by the finger, and includes: a finger rest unit on which the finger is placed, the finger position sensor capable of detecting one of three positions, such as right, left, and middle parts, of the finger rest unit touched by the finger, and the vertical switch switchable by the vertical movement of the finger rest unit.

23. The computer program according to Claim 22,
wherein the finger rest unit is formed so as to support the finger by two rotary bodies having a rotary axis extending in the longitudinal direction of the operating finger,
the character input device includes a rotation detection sensor capable of detecting whether or not the two rotary bodies rotate, and
in the receiving of the signal, the output signal is received from the rotation detection sensor.
